# EUROPEAN PATENT APPLICATION

(11) **EP 4 813 711 A1**
(43) Date of publication of application: **30.09.2026**
(21) Application number: 26166968.3
(22) Date of filing: 24.03.2026
(51) Int. Cl.: B60K 17/36, B60K 1/02, B60K 6/42, F16H 3/72

(54) **GEARWHEEL BASED CVT GEARBOX DESIGN FOR ELECTRIC AND HYBRID PROPULSION**

(30) Priority: 24.03.2025 US 202563776631 P
(71) Applicant: ArvinMeritor Technology, LLC, Troy, MI 48084 (US)
(72) Inventor: Herbel, Marc Adrian Joern Rene, Columbus (US)
(74) Representative: Whitfield, Jack Stephen

(57) **Abstract**

A system may include a planetary gear system having a sun gear, a ring gear, and a plurality of planet gears mounted on a rotatable carrier. Also, the system may include a first motor and a second motor aligned coaxially along a shared central axis. Furthermore, the system may include a shared input gear coupled to the planetary gear system, where the planetary gear system is configured to combine torque contributions from the first motor and the second motor and transmit the combined torque to an output shaft. In addition, the system may include a synchronization mechanism configured to maintain alignment of rotational speeds between the first motor and the second motor.

## Description

### RELATED APPLICATIONS

The present application claims priority to U.S. Provisional Patent Application No. 63/776,631, filed March 24, 2025, titled "GEARWHEEL BASED CVT GEARBOX DESIGN FOR ELECTRIC AND HYBRID PROPULSION", the complete disclosure of which is expressly incorporated herein by reference.

### BACKGROUND

Conventional continuously variable transmissions (CVTs) used in electric and hybrid vehicles often rely on belt-and-pulley mechanisms or hydrostatic systems, which introduce inefficiencies due to frictional losses, wear, and complex control requirements. These traditional CVT designs can suffer from limited torque-handling capabilities and durability issues, particularly under high-load conditions. To address these shortcomings, gearwheel-based CVT solutions have been explored, utilizing planetary gear arrangements to achieve smooth, continuous gear ratio transitions. However, existing implementations often lack the efficiency, compactness, and adaptability required for modern electric and hybrid propulsion systems. There remains a need for a transmission design that offers high torque efficiency, seamless power modulation, and minimal energy losses while maintaining a lightweight and durable structure.

### SUMMARY

The present disclosure provides a gearwheel-based continuously variable transmission (CVT) gearbox designed for electric and hybrid propulsion systems. The system employs a dual-motor planetary gear configuration, eliminating the need for belt-driven mechanisms and achieving continuous variation in output speed through controlled motor speed differentials. This design integrates a sun gear, planet gears, and a ring gear, with two electric motors providing input to different components of the planetary system. By dynamically adjusting the relative speeds of these motors, the transmission achieves infinitely variable speed ratios without relying on discrete gear shifts or friction-based components. The electronically controlled torque distribution optimizes power delivery, enhances energy efficiency, and reduces mechanical complexity. This approach ensures smooth acceleration, improved vehicle efficiency, and enhanced durability compared to traditional CVT systems.

The gearbox is equipped with an advanced electronic control unit (ECU) that actively monitors torque demand, vehicle speed, and battery state to optimize power distribution between the two motors. The ECU enables multiple operational modes, including energy-saving, performance, and regenerative braking, adapting seamlessly to different driving conditions. Additionally, the planetary gear structure ensures even load distribution, reducing component wear and enhancing the system's lifespan. The modular and compact design allows for easy integration into various electric and hybrid vehicle architectures, supporting both front-wheel-drive and all-wheel-drive configurations. By replacing traditional CVT limitations with an efficient and scalable gear-based system, this disclosure provides a highly adaptable and cost-effective transmission solution for the next generation of electrified vehicles.

### BRIEF DESCRIPTION OF THE DRAWINGS

FIG. 1 is a schematic diagram of a traction assembly, according to principles of the present disclosure.
FIG. 1A is a diagrammatic view of the traction assembly of FIG. 1, according to principles of the present disclosure.
FIG. 1B is a diagrammatic view of a portion of the traction assembly of FIG. 1, according to principles of the present disclosure.
FIG. 1C is an exploded view of a differential assembly of the traction assembly of FIG. 1, according to principles of the present disclosure.
FIG. 1D is an exploded view of the differential assembly of FIG. 1C, according to principles of the present disclosure.
FIG. 1E is a representation of a planetary gearset of the traction assembly of FIG. 1 in a first operating state, according to principles of the present disclosure.
FIG. 1F is a representation of a planetary gearset of the traction assembly of FIG. 1 in a second operating state, according to principles of the present disclosure.
FIG. 1G is a representation of a planetary gearset of the traction assembly of FIG. 1 in a third operating state, according to principles of the present disclosure.
FIG. 1H is a representation of a planetary gearset of the traction assembly of FIG. 1 in a fourth operating state, according to principles of the present disclosure.
FIG. 1I is a representation of a hollow shaft motor of the traction assembly of FIG. 1, according to principles of the present disclosure.
FIG. 2A is a diagram of energy flow in an electrified vehicle that is a hybrid according to principles of the present disclosure.
FIG. 2B is a diagram of energy flow in an electrified vehicle that is fully electric according to principles of the present disclosure.
FIG. 3 is a schematic diagram of a dual-axle multi-mode adjustable hybrid vehicle system featuring an integrated front axle, showcasing how power can be dynamically managed between axles to enhance performance and energy efficiency.
FIG. 4 is a schematic diagram of an integrated axle, demonstrating a modular approach to vehicle drivetrain design that allows seamless integration of hybrid propulsion components.
FIG. 5 illustrates another dual-axle multi-mode adjustable hybrid vehicle system with an integrated front axle, offering an alternative layout for optimizing torque distribution and regenerative braking capabilities.
FIG. 6 is a schematic diagram of a three-axle multi-mode adjustable hybrid vehicle system with an integrated front axle, expanding the application of the dual-axle concept to larger vehicles requiring additional traction and stability control.
FIG. 7 is another variation of a three-axle multi-mode adjustable hybrid vehicle system with an integrated front axle, emphasizing scalability and adaptability to different powertrain requirements.
FIG. 8 is an additional example of a three-axle multi-mode adjustable hybrid vehicle system with an integrated front axle, further illustrating the range of possible configurations that can be implemented using the disclosed principles.
FIG. 9 is a schematic diagram of a controller operatively coupled with other components of the system, highlighting the role of electronic control in managing power distribution, operational modes, and energy recovery within the hybrid vehicle system.
FIGs. 10A and 10B are a flow chart of a process, according to an example of the present disclosure.
FIG. 11 is a flow chart of a process, according to an example of the present disclosure.

### DETAILED DESCRIPTION

The spur gear differential remains a cornerstone of automotive drivetrain technology due to its robust design, simplicity, and reliability. It features a pair of sun gears, typically spur gears, coupled to the left and right output shafts, with multiple pairs of planet gears symmetrically arranged around them. These planet gears mesh together in pairs, with one gear engaging one sun gear and the other engaging the opposing sun gear. The planet gears are mounted on spindles connected to a crown gear casing that serves as the input mechanism. This arrangement enables smooth torque distribution between the output shafts, ensuring consistent and reliable operation under various load conditions. The spur gear design's straight-toothed profile simplifies manufacturing, allowing for high precision and lower production costs compared to the angled teeth of bevel gears. Its inherent modularity and symmetry further reduce alignment issues, enhancing operational longevity and making it an ideal choice for a wide range of applications.

One of the primary advantages of the spur gear differential is its efficiency and durability. The symmetrical engagement of the planet gears minimizes frictional losses and ensures even load distribution, reducing wear and extending the lifespan of the gears. Unlike bevel gear differentials, which require precise angular alignment and are more susceptible to alignment-related issues, the spur gear differential's straightforward design is less prone to mechanical complications. This reliability, combined with its cost-effective production, makes the spur gear differential a preferred choice for automotive manufacturers seeking a balance between performance and affordability. Furthermore, its robust construction ensures dependable operation under demanding conditions, such as high torque loads or uneven road surfaces, where precise torque distribution is useful.

Modern attempts to improve upon the spur gear differential have focused on achieving more compact designs, often by modifying the gear profiles of the sun and planet gears. These designs aim to reduce the overall size of the differential by shifting the contact points between the planet gears closer to one of the sun gears. While these modifications can result in size reductions, they often introduce significant trade-offs. Specifically, the modified gear profiles can create stress concentrations and weaken one or more gear meshes, compromising the strength and reliability of the system. This can lead to premature wear and potential failure under high-stress conditions, making these designs less suitable for applications requiring durability and consistent performance.

In contrast, the original spur gear differential avoids these compromises by maintaining unaltered gear profiles, ensuring consistent gear tooth engagement and load distribution. The symmetrical arrangement of the planet gears and the straightforward meshing of the gears contribute to its superior strength and reliability compared to modern variants. While the original design may require slightly more space than some compact alternatives, this trade-off is more than justified by its enhanced durability and operational dependability. This makes the original spur gear differential particularly suitable for applications where long-term performance and resistance to wear are paramount, such as in heavy-duty vehicles or vehicles operating under variable load conditions.

By leveraging modern materials and manufacturing technologies, the original spur gear differential can be further optimized to meet the demands of modern automotive systems without sacrificing its inherent advantages. Lightweight, high-strength materials, such as advanced composites, can be used to reduce the differential's weight while maintaining its robust performance. Additionally, improvements in lubrication systems and thermal management can enhance efficiency and minimize wear, further extending its lifespan. These advancements allow the original spur gear differential to remain competitive with newer designs while preserving its hallmark qualities of strength, simplicity, and reliability. For these reasons, the original spur gear differential remains a superior choice for automotive applications, offering a balance of proven performance, durability, and adaptability to modern requirements.

The present disclosure relates to a gearwheel-based continuously variable transmission (CVT) gearbox for electric and hybrid propulsion systems. The design leverages a twin-motor planetary gear configuration to enable variable speed ratios while maintaining high torque efficiency. Unlike conventional CVTs, which rely on friction-based belt or chain mechanisms, this system utilizes gear-based torque modulation to achieve continuous variation in output speed. This approach eliminates slippage-related losses, enhances durability, and provides superior energy efficiency. The disclosure is particularly suitable for electric and hybrid powertrains, where optimizing power delivery and energy conservation are useful for performance and range.

Principles of the present disclosure represent a solution to optimize modernization of CVT systems for commercialized and optionally robust applications. For instance, these principles provide several advantages. Construction of such a CVT system can be straightforward and compact for hybrid and/or battery electric vehicle platforms. To start, a clutchless system such as those disclosed herein can reduce build complexity, allow dense packaging of an associated gearbox and differential, reduce overall weight of a motor housing (which is part of a load bearing assembly), and use existing or readily producible or available components. Optionally, the gearbox can provide variable output speed from ∞:1 until 1:1. As another option, the CVT system can provide low output rpm at and close to 0 rpm with peak and/or continuous torque. As still another option, torque and speed can be changed independently of output rpm so as to facilitate running close to motor efficiency optimum. On the other hand, the CVT system can be bulky in the transverse direction, require low placement within a vehicle when incorporated into an eAxle, and require 2x3 phase inverter(s) to run an associated drivetrain.

Principles of the present disclosure nonetheless present further options for optimizing implementations of such systems. Optimized gear ratios can level out rpm between Motor 1 and Motor 2 depending on application. Gear count reduction can be achieved, for example, by combining stages (e.g., stage 1 and stage 2) or otherwise. Optionally, these implementations can connect the ring gear and/or sun gear with a fixation device to fully "disengage" Motor 1 and/or Motor 2. As an adaptation for hybrid platforms, combustion engine will very likely have to be non-coaxial to gearbox.

Various factors have been taken into account to effectively implement the principles of the present disclosure in a practical manner. For instance, such principles can include incorporating a continuous variable transmission, with no clutch needed. Optionally, the gearbox can offer superior simplicity while providing full torque/power close to or at 0 rpm limited only by the vehicle's cooling capabilities and not by heat capacity of the winding of the motor. In eAxle, central drive, and other applications, torque and speed can be changed independently from each other within defined boundaries. Such principles can be useful in applications where high torque at low rpm is needed and/or where a big range of ratios is needed. In these and other ways, these principles improve efficiency and functionality compared to known gearboxes while providing solutions to applications where there is a need of high torque close to 0 rpm wheel speed and/or tool speed, where a wide spread of ratio is needed within vehicles, where variable output speed from infinite: 1 until 1:1 ratio is desirable, and more.

The summation gearbox provides precise control over power distribution, enabling the system to operate at or near 0 RPM without being constrained by stall torque limitations. Instead, the system's performance in low-speed or high-torque scenarios is primarily governed by its overall cooling capabilities. This design ensures that torque delivery remains efficient and sustainable under prolonged operation, mitigating risks of overheating while maintaining optimal energy conversion. The ability to modulate power without stall torque constraints allows for improved low-speed maneuverability, seamless regenerative braking, and enhanced energy efficiency in electrified vehicle applications. By leveraging advanced thermal management, the summation gearbox sustains continuous operation under varying load conditions, maximizing performance without compromising system durability.

In general, principles of the present disclosure provide a gearwheel based CVT gearbox with continuous variable output speed. Implementations of these principles can employ dual planetary gearsets in coaxial setup with two hollow shaft drive motors, optionally uninterrupted without switching between gearwheel sets to change ratios or requiring a clutch. Gears in such gearboxes can be optimized for low friction and therefore low losses, useful where high torque at low rpm is needed and/or where a big range of ratio is needed. Such configurations present several advantageous features, such as continuous variable output speed from infinite: 1 until 1:1 ratio (for either ratio of Motors 1 and 2), low output rpm at and close to 0 rpm with peak/continuous torque, reduced overall weight as motor housing is part of the load bearing assembly, and dense packaging of gearbox and differential.

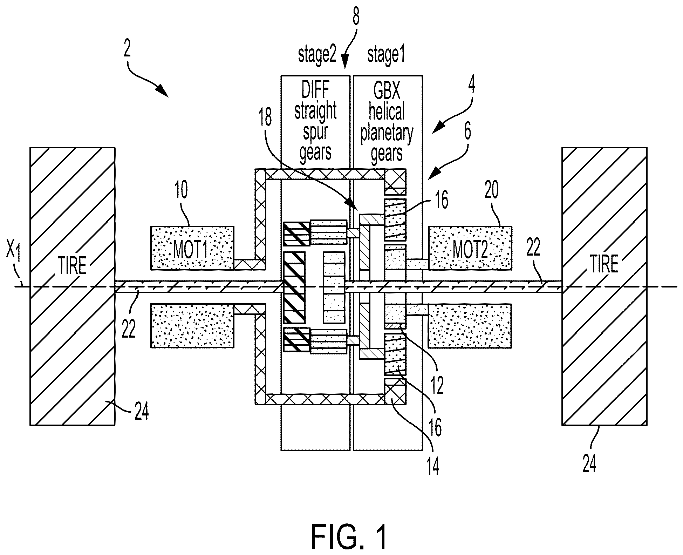

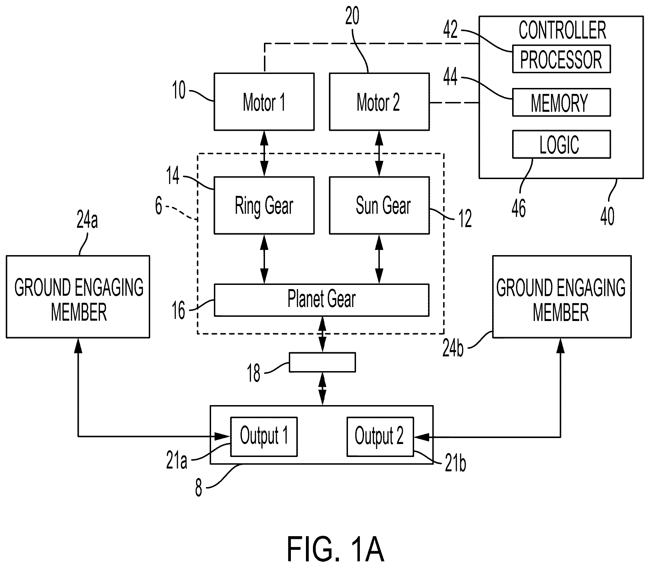

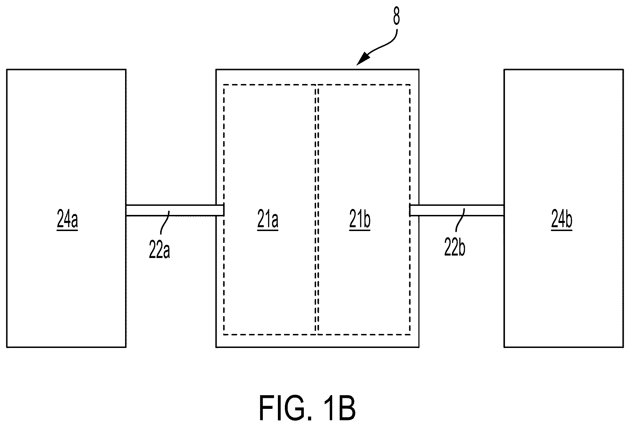

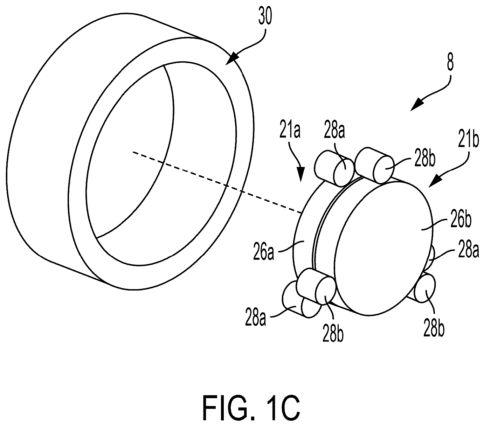

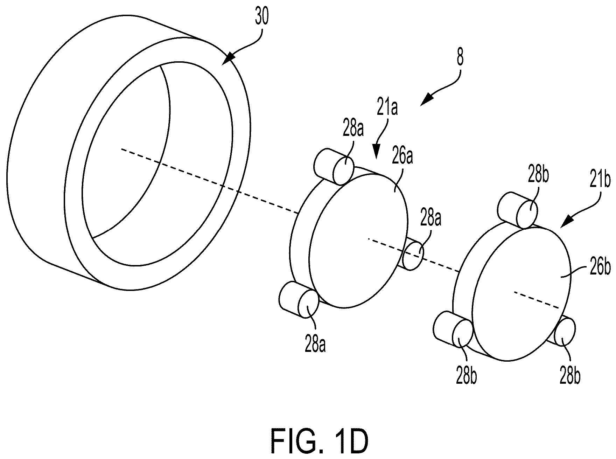

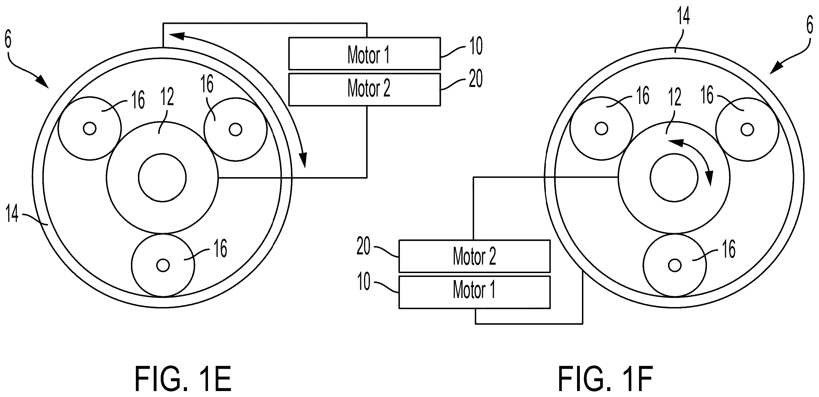

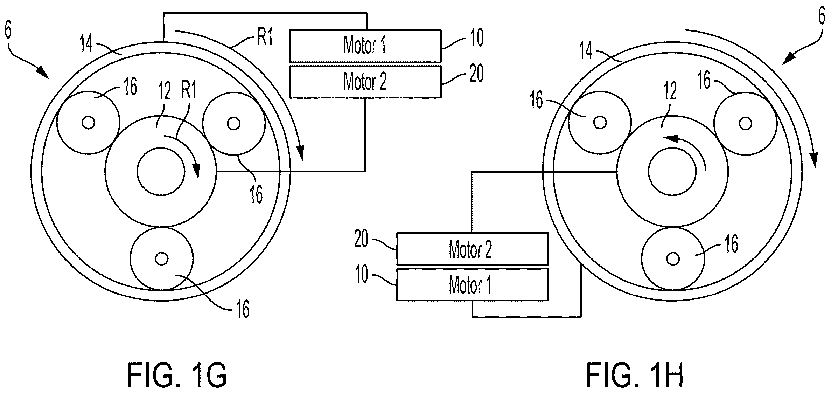

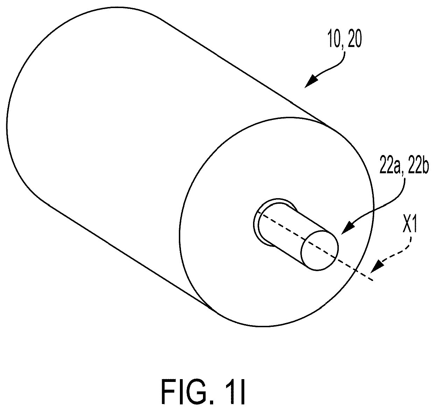

Turning to the figures, FIG. 1 illustrates a functional schematic of a dual-motor multispeed system 2 incorporating a planetary gear system 4 coupled with a first drive motor 10 or a second drive motor 20 each including an output, the planetary gear system 4 operable to decouple the speed range of the vehicle from that of the first drive motor 10 and the second drive motor 20. Illustrated is a multistage system including a first stage of gears or planetary gearset 6 and a second stage of gears or differential 8. In embodiments, the first stage (stage 1) is a gearbox including helical planetary gears and the second stage (stage 2) is a differential of straight spur gears. The illustrated example is just one of many examples described herein and of those that one skilled in the art would understand wielded with this disclosure. Nonetheless, this configuration enhances the efficiency and flexibility of power distribution in electric and hybrid vehicles by enabling variable torque and speed output. Referring still to FIG. 1, first motor 10 is positioned on a first lateral side of the gear system 4, illustratively a left side of FIG. 1, and second motor 20 is positioned on a second lateral side of the gear system 4, illustratively a right side of FIG. 1.

As depicted in FIGs. 1-1H, the planetary gear system 6 includes a sun gear 12, a ring gear 14, and a plurality of planet gears 16 coupled between the sun gear 12 and the ring gear 14. The ring gear 14 is operably coupled to the first motor 10 and the sun gear 12 is operably coupled to the second motor 20. A carrier 18 serves as the output mechanism, transmitting rotational force to the vehicle's external load, represented in this system as the opposing axles 22 and ground engaging members 24 or wheels. By dynamically adjusting the relative speeds of the motors, the system allows for smooth and continuous transitions between speed ranges without the need for discrete gear shifts.

Referring now to FIGs. 1-1H, differential 8 is a secondary planetary gearset 8 and includes a support or ring gear 30 adapted to constrain a first gearset 21a and a second gearset 21b. In embodiments, support or ring gear 30 remains generally stationary when differential 8 is operational such that a first gearset 21a and a second gearset 21b are capable of rotating relative to support or ring gear 30. First gearset 21a includes a central gear 26a and a plurality of planetary gears 28a coupled intermediate the central gear 26a and the ring gear 30 and second gearset 21b includes a central gear 26b and a plurality of planetary gears 28b coupled intermediate the central gear 26b and the ring gear 30. The first gearset 21a is operably coupled to a first axle or shaft 22a and a first ground engaging member 24a and the second gearset 21b is operably coupled to a second axle or shaft 22b and a second ground engaging member 24b. In embodiments, support or ring gear 30 is fixed relative to surrounding components. In embodiments, ring gear 30 has a set of internal gear teeth. In embodiments, ring gear 30 has a set of internal gear teeth and a set of external gear teeth.

The first electric motor 10 is coupled to ring gear 14 of the first planetary gearset 6and the second electric motor 20 is coupled to the sun gear 12 of the first planetary gearset 6. The first electric motor 10 and the second electric motor 20 are operable to rotate the ring gear 14 and sun gear 12, respectively, to rotate the planet gears 16. Planet gears 16 of the first planetary gearset 6 are operably coupled to the planet gears 28a, 28bof the second planetary gearset 8. That is, two motors 10, 20 are used as inputs to the first planetary gearset 6 which creates a variable output to the second planetary gearset 8. Second planetary gearset 8 operates as a differential and allows central gear 26a of first gearset 21a and central gear 26b of second gearset 21b, and thereby ground engaging members 24a, 24b, to rotate at different speeds. In embodiments, central gears 26a, 26b are outputs operably coupled to the first planetary gearset through another gear or geartrain, such as ring gear 30.

Referring now to FIGs. 1E-1H, first motor 10 and second motor 20 may rotate individually, together, or opposite of each other. Referring to FIG. 1E, first motor 10 is operable to rotate ring gear 14 while second motor 20 is operable to hold the sun gear 12 in a constant position thereby rotating planet gears 16 about the sun gear 12 at a first gear ratio. Referring to FIG. 1F, second motor 20 is operable to rotate sun gear 12 while first motor 10 is operable to hold the ring gear 14 in a constant position thereby rotating planet gears 16 about the sun gear 12 at a second gear ratio. Referring now to FIG. 1G, first motor 10 is operable to rotate the ring gear 14 in a first direction R1 while second motor 20 rotates the sun gear 12 in the same first direction R1. The output gears, e.g., planet gears 16, are operable to rotate as a combination of the movement of the sun gear 12 and the ring gear 14. Referring now to FIG. 1H, first motor 10 is operable to rotate the ring gear 14 in a first direction R1 while second motor 20 rotates the sun gear 12 in a different second direction 2. The output gears, e.g., planet gears 16, are operable to rotate as a combination of the movement of the sun gear 12 and the ring gear 14. In embodiments, the planet gears rotate according to an angular velocity formula wherein W_ring is the angular velocity of ring gear 14, N_ring is the number of gear teeth on the ring gear 14, W_sun is the angular velocity of the sun gear 12, N_sun is the number of gear teeth on the sun gear 12, and W_carrier is the angular velocity of the carrier 18 coupled to the planet gears 16. The angular velocity formula to calculate the output of the carrier 18 and planet gears 16 is W_carrier = ((N_ring * W_ring) + (N_sun * W_sun))/(N_ring + N_sun).

Having separate inputs, e.g., motors 10, 20, coupled to each of the sun gear 12 and ring gear 14 allows for the output torque at the carrier 18 to be altered independent of the output speed at the carrier 18. The first motor 10 and the second motor 20 may be selected to have different torque characteristics at varying speeds to ensure sufficient torque is available to the outputs (e.g., ground engaging members 24). For example, in a system 2 wherein the sun gear 12 has 36 teeth and the ring gear has 60 teeth, the output (e.g., carrier 18 carrying planet gears 14) rotates at approximately 43.75 revolutions per minute (rpm) in both a first scenario: the first motor 10 rotates the ring gear 14 at 100 revolutions per minute (rpm) and the second motor 20 rotates the sun gear 12 at -50 rpms (i.e., in the opposite direction of ring gear 14), and in a second scenario: the first motor 10 rotates the ring gear 14 at 10 revolutions per minute (rpm) and the second motor 20 rotates the sun gear 12 at 100 rpms (i.e., in the same direction of ring gear 14). In the first scenario the second motor 20 may rotate at a lower speed and provide a greater torque while the first motor 10 rotates at a higher speed and provides a lower torque, and in the second scenario the first motor 10 rotates at a lower speed and provides a higher torque while the second motor rotates at a higher speed and provides a lower torque.

In another example, system 2 may be operated to achieve a high torque, high speed configuration or a low torque, low speed configuration. For example, in a system 2 wherein the sun gear 12 has 36 teeth and the ring gear has 60 teeth, the output (e.g., carrier 18 carrying planet gears 14) rotates at approximately 71.875 revolutions per minute (rpm) when the first motor 10 rotates the ring gear 14 at 100 revolutions per minute (rpm) and the second motor 20 rotates the sun gear 12 at 25 rpms (i.e., in the same direction of ring gear 14). In this scenario the second motor 20 may rotate at a lower speed and provide a higher torque while the first motor 10 rotates at a higher speed and provides a lower torque, providing an overall high speed and high torque arrangement. In another example, the output (e.g., carrier 18 carrying planet gears 14) rotates at approximately -9.375 revolutions per minute (rpm) when the first motor 10 rotates the ring gear 14 at -75 revolutions per minute (rpm) and the second motor 20 rotates the sun gear 12 at 100 rpms (i.e., in the opposite direction of ring gear 14). In this scenario the second motor 20 may rotate at a higher speed and provide a lower torque while the first motor 10 rotates at a higher speed and provides a lower torque, providing an overall low speed and low torque arrangement.

That is, among other benefits, the use of multiple motors allows for variable torque to be achieved independent of the sped of the motors 10, 20. As such, by operating together, motors 10, 20 may operate at a variety of torques and speeds to achieve an independent output speed (e.g., at carrier 18) and each of motors 10, 20 may operate at or close to peak motor efficiency and achieve the necessary output speed. Further,

Referring again to FIG. 1, each of motors 10, 20 are positioned coaxially to each other along a first axis X1 such that the outputs 10, 20 are coaxial. In embodiments, motors 10, 20 are hollow shaft motors (e.g., see FIG. 1I) and outputs of motors 10, 20 extend through the hollo shafts of motors 10, 20. In embodiments, outputs of motors 10, 20 are a pair of axles 22a, 22b, respectively. In embodiments, axle 22b extends through both carrier 18 of first planetary gearset 6 and the hollow shaft of the second motor 20. In embodiments, each of gearsets 6, 8 are rotatable about the first axis X1 such that each of the first motor 10, second motor 20, gearset 6 (e.g., sun gear 12), gearset 8 (e.g., central gears 26a, 26b), and each of axles 22a, 22b are rotatable about the first axis X1. This arrangement reduces the length (e.g., along the x-axis perpendicular to the first axis X1) of the system 2 to decrease the occupied space of system 2 within an installed volume.

Referring again to FIG. 1A, an electronic controller 40 is operably coupled to each of the first motor 10, second motor 20, and system 2. Electronic controller 40 includes a processor 42 with an associated computer readable medium, illustratively memory 44. Memory 44 includes an operational logic 46 which when executed by processor 42 causes electronic controller 40 to instruct motors 10, 20 to operate according to one or more speeds, torques, or associated operating states. In embodiments, controller 40 includes one or more motor controllers. In embodiments, one or more motor controllers are coupled with controller 40 and include one or more inverters. In embodiments, a first three-phase inverter is coupled to the first motor 10 and a second three-phase inverter is coupled to the second motor 20. The term "logic" as used herein includes software and/or firmware executing on one or more programmable processors, application-specific integrated circuits, field-programmable gate arrays, digital signal processors, hardwired logic, or combinations thereof. Therefore, in accordance with the embodiments, various logic may be implemented in any appropriate fashion and would remain in accordance with the embodiments herein disclosed. A non-transitory machine-readable medium comprising logic can additionally be considered to be embodied within any tangible form of a computer-readable carrier, such as solid-state memory, magnetic disk, and optical disk containing an appropriate set of computer instructions and data structures that would cause a processor to carry out the techniques described herein. This disclosure contemplates other embodiments in which the magnetic coupler state logic is not microprocessor-based. Further, electronic controller 40 may be contained within a single device or be a plurality of devices networked together to provide the functionality described herein.

The schematic presents two different configurations of epicyclic gearing: a single planetary gear set on the left and a double planetary gear set on the right. The single planetary gear configuration provides a compact and efficient design for standard power-split applications, while the double planetary gear set allows for additional torque multiplication and improved adaptability to varying load conditions. The choice between these configurations depends on the specific performance requirements of the vehicle.

The presence of opposing tires and axles connected to the sun gear and the carrier ensures efficient power transfer to the vehicle's drivetrain. In embodiments, system 2 enables torque vectoring, where power distribution can be adjusted dynamically between the left and right wheels 24 to enhance vehicle stability and traction. Furthermore, by leveraging electronically controlled motor inputs, the system can implement advanced driving modes, including regenerative braking and adaptive energy recuperation.

Overall, the planetary gear-based dual-motor multispeed system illustrated in FIG. 1 provides a scalable and efficient approach to power management in modern electric and hybrid vehicles. By allowing independent motor control and eliminating the need for traditional mechanical gear shifting, this configuration enhances driving performance, reduces energy losses, and contributes to a more responsive and adaptable propulsion system.

The system employs a dual-motor planetary gear unit to facilitate dynamic torque distribution across different operating conditions. The planetary arrangement consists of a sun gear, planet gears, and a ring gear, where the interaction between these components enables smooth and continuous gear ratio adjustments. By controlling the relative speeds of the two motors, the system achieves an infinitely variable transmission effect without requiring discrete gear shifts. This method usefully reduces mechanical complexity compared to traditional stepped transmissions while maintaining seamless torque delivery. The system's ability to provide variable output without interruption makes it ideal for electric and hybrid propulsion applications.

The gearbox design integrates two electric motors, each contributing to power distribution through independent or combined operation. The first motor is coupled directly to the sun gear, while the second motor is linked to the ring gear or carrier, depending on the desired configuration. This dual-motor approach enables precise control over the output speed by dynamically adjusting the speed differential between the two motors. Unlike conventional transmissions, which rely on mechanical clutches and torque converters, this system achieves smooth acceleration and deceleration through electronically controlled torque blending. The elimination of conventional shifting components results in a more compact and lightweight transmission assembly.

The planetary gear set comprises multiple planet gears mounted on a shared carrier, distributing load evenly across the system. This design enhances torque handling capabilities while minimizing stress on individual components. The configuration allows torque to be transmitted efficiently from the input motors to the output shaft without excessive frictional losses. The ring gear serves as a secondary input/output element, depending on the operating mode. This structure enables multiple power delivery modes, optimizing efficiency for various driving conditions, including acceleration, steady-state cruising, and regenerative braking.

One of the useful advantages of this disclosure is its ability to function as a continuously variable transmission without relying on belts, pulleys, or hydraulic mechanisms. Traditional CVT systems often suffer from efficiency losses due to friction and heat generation in belt or chain drives. By contrast, the gear-based approach minimizes energy dissipation while offering precise control over torque application. This makes the proposed system highly efficient, particularly for electric vehicles where reducing power losses is crucial for extending range. Additionally, the mechanical integrity of the system ensures a longer operational lifespan compared to belt-driven CVTs.

The control system governing the gearbox operation utilizes an advanced electronic control unit (ECU) to modulate motor speeds and optimize torque distribution. The ECU continuously monitors input torque, speed demands, and power availability from the electric motors. By adjusting the rotational speeds of the sun and ring gears, the ECU ensures that the output shaft delivers the necessary torque and speed ratio for any given driving condition. The seamless nature of the gear engagement eliminates the need for physical gear shifting, providing a smooth and responsive driving experience.

The ECU is programmed with multiple operating modes to enhance efficiency and adaptability. These modes include an energy-saving mode for extended range, a performance mode for high acceleration, and a regenerative braking mode to recover kinetic energy. Each mode adjusts the torque split between the two motors, optimizing power delivery to meet the specific demands of the driver and terrain. The system's ability to switch seamlessly between these modes ensures that energy efficiency is maximized under all driving conditions.

A useful feature of the gearbox is its capability to operate in a power-split mode, where one motor functions as a generator while the other provides propulsion. This is particularly advantageous in hybrid powertrains, where energy recuperation plays a crucial role in improving overall efficiency. In this mode, excess mechanical energy from deceleration or coasting can be converted into electrical energy, stored in the vehicle's battery, and reused for propulsion. This regenerative braking integration reduces reliance on friction-based braking, lowering wear and tear on conventional braking components.

The planetary gear system also allows for load balancing between the motors, reducing strain on individual components. By distributing torque efficiently across the drivetrain, the system enhances durability and prevents overheating. This feature is especially beneficial in high-demand scenarios, such as towing or steep inclines, where power requirements fluctuate dynamically. The ability to adjust torque delivery in real-time ensures optimal performance and prevents unnecessary energy losses.

The mechanical layout of the gearbox is designed to be compact and lightweight, making it suitable for integration into various vehicle platforms. The elimination of hydraulic actuators, clutch assemblies, and belt-driven components usefully reduces the overall weight of the transmission system. This weight reduction translates to improved vehicle efficiency, as less energy is required to move the drivetrain assembly. Additionally, the modular nature of the design allows for easy adaptation to different electric and hybrid vehicle configurations.

The proposed gearbox can be implemented in both front-wheel-drive and all-wheel-drive systems. For front-wheel-drive applications, the transmission is integrated with the electric drive axle, directly transmitting power to the wheels. In all-wheel-drive configurations, the system can work in conjunction with an additional electric or mechanical drivetrain to optimize traction and handling performance. The flexibility of this design ensures that it can be tailored to a wide range of vehicle architectures.

Manufacturing efficiency is another advantage of this disclosure. The system's reliance on well-established planetary gear mechanisms simplifies production and reduces costs associated with complex machining or specialized materials. The use of standard gear-cutting processes ensures that components can be mass-produced with high precision. Additionally, the gear-based CVT design requires minimal maintenance compared to belt-driven systems, further lowering the total cost of ownership.

The gearwheel-based CVT gearbox represents a useful advancement in electric and hybrid vehicle transmission technology. Its ability to provide smooth, continuous power variation without the drawbacks of traditional CVTs makes it a highly desirable solution for next-generation propulsion systems. By optimizing power delivery, reducing energy losses, and eliminating the need for conventional shifting mechanisms, this system enhances both performance and efficiency. The integration of advanced electronic controls ensures that torque distribution is managed intelligently, adapting dynamically to changing driving conditions.

In summary, this disclosure presents a highly efficient, durable, and adaptable transmission system for electric and hybrid vehicles. The dual-motor planetary configuration enables precise torque modulation, seamless acceleration, and optimized energy consumption. By eliminating traditional CVT drawbacks such as belt slippage, friction losses, and mechanical complexity, this gearbox design offers a superior alternative for modern automotive applications. The disclosure provides a scalable, cost-effective solution that aligns with the evolving demands of electric and hybrid propulsion technologies, ensuring enhanced vehicle performance and energy efficiency.

The present disclosure incorporates a coaxial continuously variable transmission (CVT) gearbox design to achieve seamless and efficient power delivery in electric and hybrid propulsion systems. Unlike conventional stepped transmission systems, this gearbox uses a planetary gear mechanism with coaxially arranged dual motors to provide continuously variable speed ratios. The design includes a primary input shaft that is coupled to both a sun gear and an internal ring gear, with planet gears arranged between them. The planet gears are mounted on a shared carrier, which functions as an intermediary torque distributor between the motors and the output shaft. By dynamically controlling the relative rotational speeds of the input components, the system enables smooth and uninterrupted torque delivery without requiring mechanical clutching elements.

A useful feature of this gearbox design is its use of two coaxially aligned electric motors, each of which interfaces with different elements of the planetary gear system. The first motor is directly coupled to the sun gear, while the second motor engages with the ring gear. This dual-input configuration allows for variable speed control through differential motor operation. By adjusting the rotational speed of the motors relative to each other, the transmission can achieve an infinitely variable output ratio, seamlessly adapting to different driving conditions. This method eliminates the need for torque converters or belt-driven components, reducing mechanical losses and improving overall drivetrain efficiency.

The planetary gear system is designed to handle high torque loads while maintaining a compact and lightweight structure. The sun gear, planet gears, and ring gear are precision-machined to minimize friction and enhance durability. The use of advanced materials, such as high-strength alloys and composite coatings, ensures optimal wear resistance and thermal stability under extended operation. Additionally, the planetary gear configuration allows for even load distribution, reducing stress concentrations on individual components and improving long-term reliability.

The electronic control unit (ECU) plays a crucial role in managing the operation of the gearbox by continuously monitoring vehicle speed, load conditions, and motor input parameters. The ECU dynamically adjusts the rotational speed and torque output of each motor to optimize efficiency and performance. For example, during low-speed cruising, the ECU may prioritize operation of one motor while reducing input from the other to conserve energy. Conversely, during acceleration or high-load scenarios, the ECU increases the torque contribution from both motors, maximizing power output. This intelligent control strategy allows for smooth transitions between different speed ratios without the need for mechanical shifting.

The regenerative braking function of the gearbox further enhances energy efficiency by recovering kinetic energy during deceleration. When the vehicle slows down, the ECU directs energy from the rotating drivetrain back into the battery system, effectively recharging the power source. The planetary gear configuration facilitates this process by allowing the motors to function as generators while maintaining continuous torque delivery. This regenerative capability reduces reliance on conventional friction brakes, prolonging brake life and improving overall vehicle efficiency.

The modularity of the gearbox design enables its integration into various vehicle platforms, including front-wheel-drive, rear-wheel-drive, and all-wheel-drive configurations. The compact coaxial arrangement minimizes space requirements, making it suitable for applications where packaging constraints are a concern. Additionally, the gearbox can be adapted for use in hybrid powertrains, where it facilitates seamless transitions between electric and internal combustion engine power sources. The system's adaptability ensures compatibility with a wide range of vehicle architectures, providing manufacturers with a flexible and scalable drivetrain solution.

In summary, the proposed gearwheel-based CVT gearbox offers a novel approach to continuous power variation in electric and hybrid vehicles. By leveraging a dual-motor planetary gear configuration, the system achieves high efficiency, reduced mechanical complexity, and enhanced durability. The advanced ECU-driven control strategy optimizes torque distribution and regenerative energy recovery, further improving performance. This innovative design provides a viable alternative to traditional CVT systems, addressing key limitations while delivering superior efficiency, smooth operation, and extended longevity for next-generation propulsion systems.

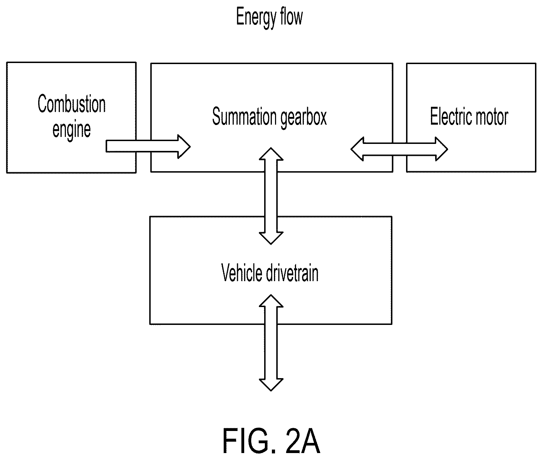

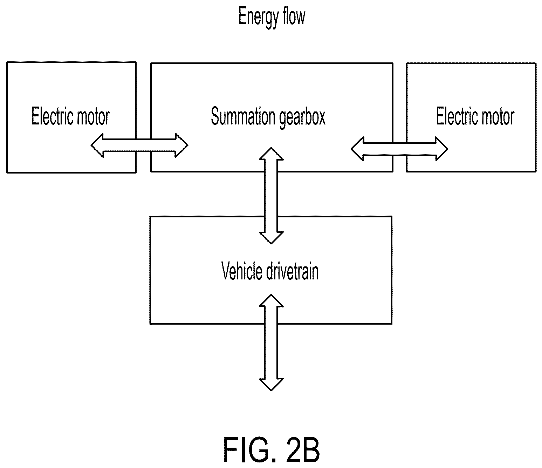

FIG. 2A and FIG. 2B illustrate the energy flow in a continuously variable transmission (CVT) gearbox system designed for electrified vehicle propulsion. FIG. 2A represents a configuration where energy is derived from both an electric motor and an alternative power source, while FIG. 2B depicts a dual-electric motor setup with energy being supplied solely by electric sources. These figures highlight the functional distribution of energy within the summation gearbox, electric propulsion components, and vehicle drivetrain.

In FIG. 2A, the summation gearbox integrates power from Motor 1, which in this configuration represents an alternative power source such as an internal combustion engine or a fuel cell, and Motor 2, which is an electric motor. Motor 1 provides primary torque input, while Motor 2 supplements power delivery based on demand. This configuration enables efficient energy management by leveraging Motor 2 for acceleration and regenerative braking, thereby improving overall energy efficiency. The summation gearbox ensures smooth torque blending between the two power sources, adjusting input ratios dynamically to optimize vehicle performance. It should be noted that the numbering of the motors is not restrictive, as the system can function with Motor 1 and Motor 2 reversed in roles.

FIG. 2B illustrates an alternative approach where the summation gearbox receives power from both Motor 1 and Motor 2, each of which is an electric motor. This fully electric configuration provides enhanced energy efficiency and eliminates emissions by relying exclusively on electric power. The two motors operate in coordination, adjusting their torque contributions in real time to match driving conditions. The summation gearbox distributes the combined energy to the vehicle drivetrain, enabling a flexible and efficient power transmission system suitable for battery-electric vehicles.

The summation gearbox in both configurations acts as an intermediary component that regulates energy flow and ensures optimal torque distribution. By varying the speed ratio between input and output elements, the gearbox accommodates different driving scenarios, such as acceleration, cruising, and regenerative braking. This design enhances drivability by delivering seamless power transitions without the need for traditional gear shifting, which reduces mechanical losses and improves vehicle longevity.

One useful aspect of the CVT gearbox system in FIG. 2A and FIG. 2B is its ability to modulate power inputs dynamically. In configurations where Motor 1 represents an alternative power source, the system prioritizes electric propulsion during low-speed conditions, reducing overall energy consumption. At higher speeds or under heavy load, Motor 1 provides additional torque, ensuring sustained performance. In fully electric applications, as shown in FIG. 2B, the system balances the operation of both motors to optimize energy consumption and extend battery life.

The regenerative braking functionality incorporated in the system further enhances energy efficiency by capturing kinetic energy during deceleration and converting it into electrical energy for storage. This feature is particularly beneficial in urban driving conditions, where frequent stop-and-go motion allows for continuous energy recuperation. The summation gearbox facilitates the smooth integration of regenerative braking, ensuring that the transition between propulsion and braking modes remains seamless.

In summary, FIG. 2A and FIG. 2B illustrate the energy flow characteristics of a CVT gearbox system in electrified vehicle applications. The summation gearbox serves as a critical component for optimizing power delivery, reducing mechanical inefficiencies, and enhancing vehicle performance. Whether in a partially electric or fully electric configuration, this system ensures that energy is distributed efficiently between power sources and the drivetrain, contributing to improved energy efficiency, extended driving range, and overall sustainability in modern vehicle propulsion technologies.

The summation gearbox enables a wide range of possibilities for electrified vehicle propulsion by seamlessly integrating multiple power sources. In one possible configuration, the gearbox combines input from an electric motor and an alternative power source, such as an internal combustion engine or a fuel cell. The alternative power source provides primary torque input, while the electric motor supplements power delivery as needed. This setup optimizes energy efficiency by dynamically managing power contributions, using the electric motor to enhance acceleration and regenerative braking while allowing the alternative power source to sustain performance under high-load conditions. The summation gearbox continuously adjusts the input ratios to ensure smooth power blending, enhancing overall drivability.

Another possible configuration of the summation gearbox incorporates two electric motors working in coordination. In this arrangement, each motor dynamically adjusts its torque contribution in real time to match driving conditions. This design eliminates the need for a combustion-based power source, making it ideal for battery-electric vehicles. The summation gearbox ensures efficient energy distribution by modulating motor speeds and optimizing power transmission to the drivetrain. This enables precise control over torque application, improving acceleration, efficiency, and energy recovery without the reliance on traditional gear-shifting mechanisms.

By varying the speed ratio between input and output elements, the summation gearbox can adapt to different driving scenarios, such as acceleration, cruising, and regenerative braking. The system provides seamless power transitions without mechanical gear shifting, reducing energy losses and improving overall efficiency. Its ability to function across different operating conditions allows for improved performance in urban stop-and-go traffic as well as highway driving, where energy optimization is crucial.

One of the primary advantages of this system is its ability to dynamically modulate power input. When an alternative power source is used, the gearbox prioritizes electric propulsion during low-speed operation, reducing energy consumption and emissions. At higher speeds or under heavy loads, the alternative power source contributes additional torque to maintain performance. In a fully electric configuration, the gearbox balances power between both motors to optimize energy use and extend battery life, ensuring sustained performance over extended driving ranges.

Additionally, the summation gearbox enhances energy efficiency through regenerative braking, capturing kinetic energy during deceleration and converting it into electrical energy for storage. This process is especially beneficial in urban driving conditions, where frequent braking allows for continuous energy recuperation. The smooth integration of regenerative braking within the gearbox enables the system to recover energy efficiently, reducing overall power consumption and improving the sustainability of electrified vehicle propulsion.

Overall, the summation gearbox offers a flexible and efficient approach to energy management in electrified vehicle applications. By ensuring optimal power distribution, reducing mechanical inefficiencies, and enabling seamless transitions between power sources, the system contributes to enhanced performance, improved energy efficiency, and extended driving range. Whether in a partially electric or fully electric configuration, the summation gearbox provides a scalable solution for modern vehicle propulsion technologies, supporting a transition toward more energy-efficient and sustainable transportation systems.

The principles of the present disclosure can be applied across various vehicle configurations, optimizing power distribution, efficiency, and adaptability in multi-mode hybrid vehicle systems. The following figures illustrate practical implementations of these principles in different drivetrain architectures:

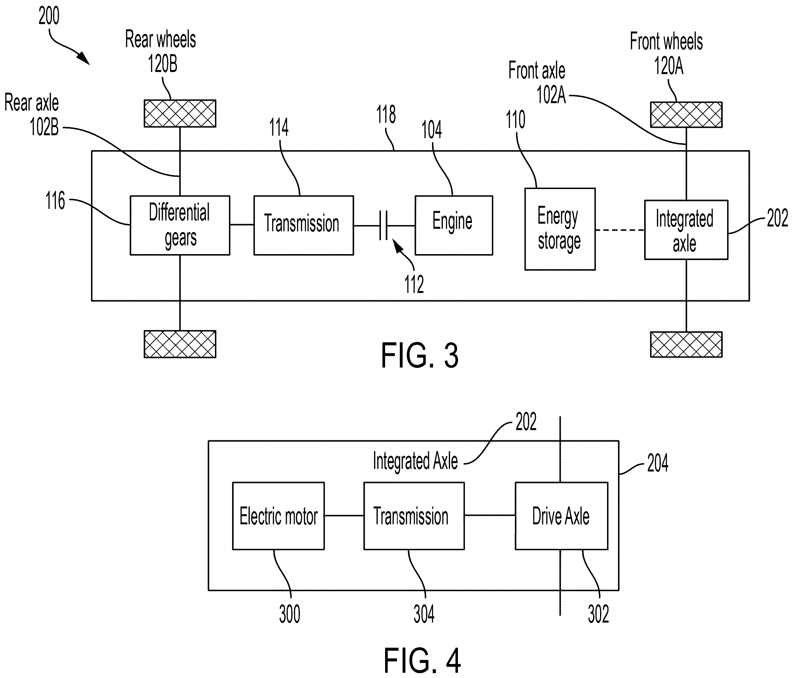

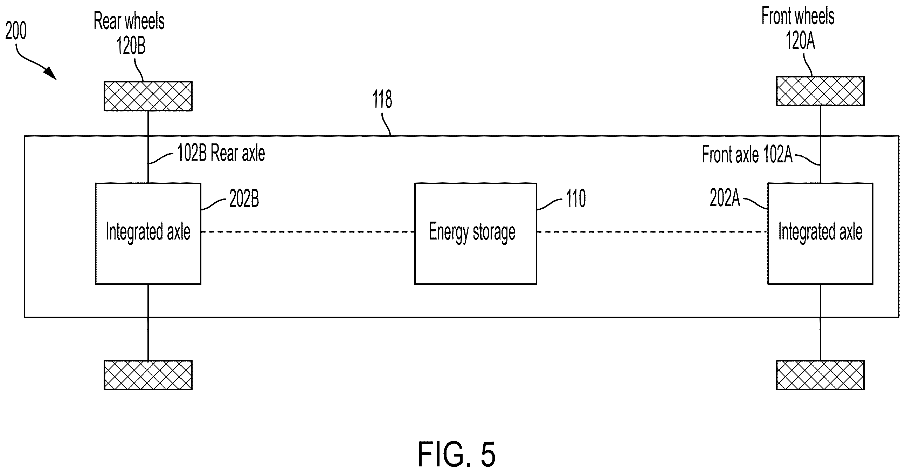

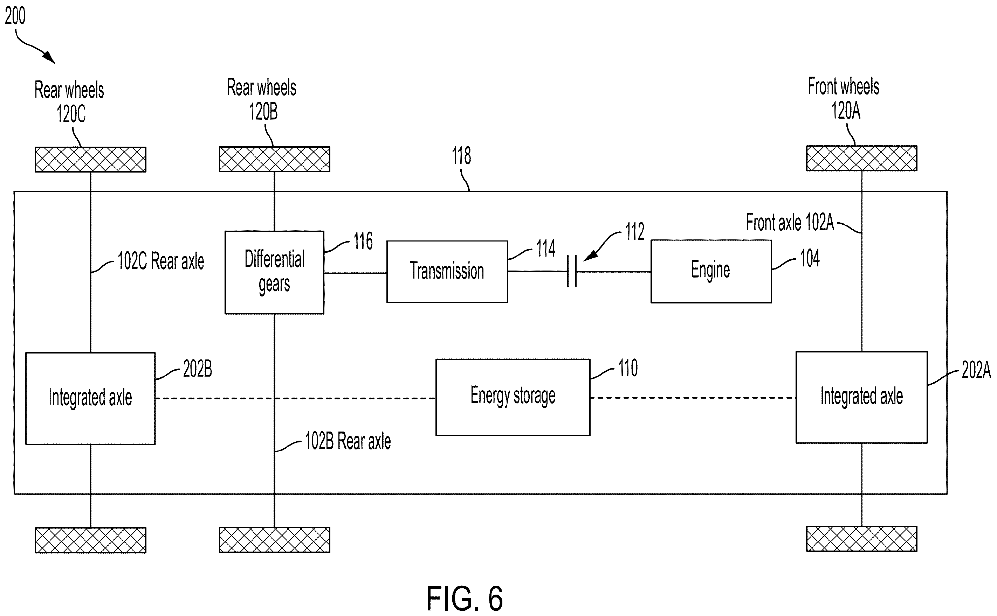

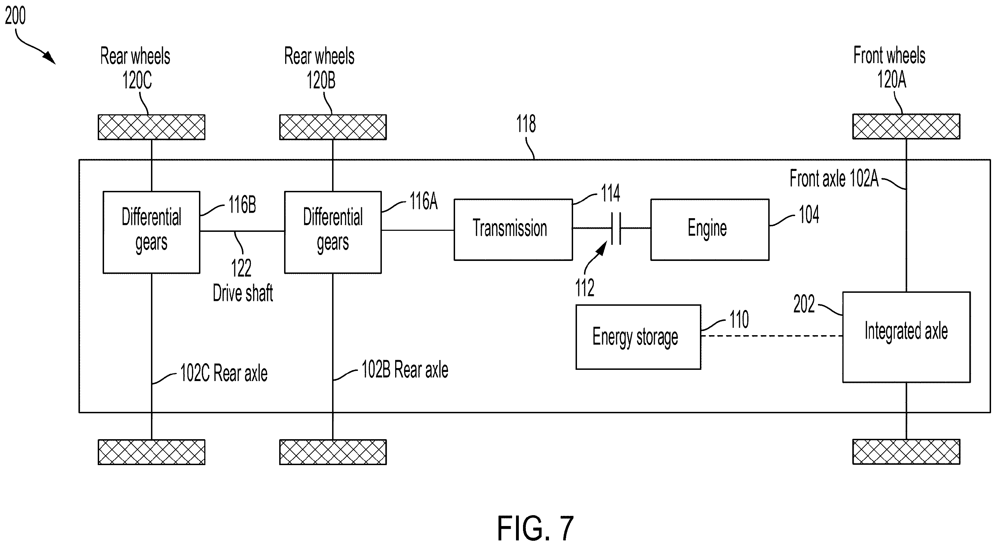

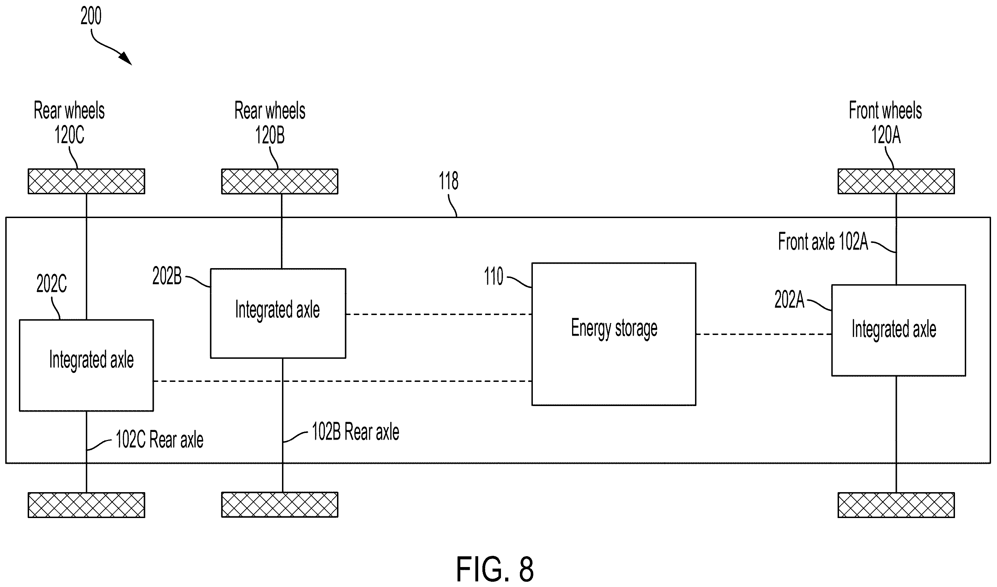

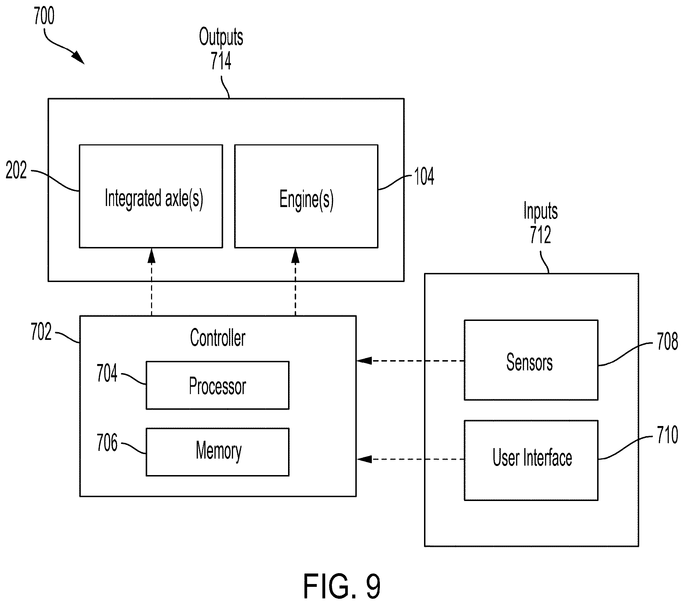

FIG. 3 is a schematic diagram of a dual-axle multi-mode adjustable hybrid vehicle system featuring an integrated front axle, showcasing how power can be dynamically managed between axles to enhance performance and energy efficiency. FIG. 4 is a schematic diagram of an integrated axle, demonstrating a modular approach to vehicle drivetrain design that allows seamless integration of hybrid propulsion components. FIG. 5 illustrates another dual-axle multi-mode adjustable hybrid vehicle system with an integrated front axle, offering an alternative layout for optimizing torque distribution and regenerative braking capabilities. FIG. 6 is a schematic diagram of a three-axle multi-mode adjustable hybrid vehicle system with an integrated front axle, expanding the application of the dual-axle concept to larger vehicles requiring additional traction and stability control. FIG. 7 presents another variation of a three-axle multi-mode adjustable hybrid vehicle system with an integrated front axle, emphasizing scalability and adaptability to different powertrain requirements. FIG. 8 provides an additional example of a three-axle multi-mode adjustable hybrid vehicle system with an integrated front axle, further illustrating the range of possible configurations that can be implemented using the disclosed principles. And FIG. 9 is a schematic diagram of a controller operatively coupled with other components of the system, highlighting the role of electronic control in managing power distribution, operational modes, and energy recovery within the hybrid vehicle system.

FIG. 3 shows an example of a multi-mode hybrid vehicle system 200 as disclosed herein. The system 200 includes a plurality of motive power sources. For example, an integrated axle 202 is mechanically coupled with a steerable front axle 102A such that the integrated axle 202 is used as a motive power source to provide the motive force to drive the front wheels 120A using electrical energy provided form the energy storage 110. The rear axle 102B is mechanically coupled with the differential gears 116, which is mechanically coupled with the transmission 114, which is mechanically coupled with or decoupled from the engine 104 via the clutch 112. The rear axle 102B, therefore, is controlled using the motive force provided by the engine 104, another power motive source. For simplicity, the inverter(s) for the integrated axle 202 and the fuel reservoir 108 coupled with the engine 104 are not shown.

As disclosed herein, an "integrated axle" includes a type of electric axle drive that is affixed to the wheels to rotate them. In examples, the integrated axle combines the functionality of an electric motor-generator, power electronics such as an inverter, and in some examples a cooling circuit to reduce cost and increase efficiency in a single component. Integrated axles are neither directly nor indirectly coupled with any combustion engine, thereby using solely the motor-generator included therein to provide mechanical power to a drive axle coupled thereto.

In some examples, the motor-generator of the integrated axle may be mounted on the drive axle. In some embodiments, the integrated axle is configured to reduce interfaces and components that may induce efficiency loss. Examples of such components include wires and copper cables that link the components together, plugs, bearings for rotating components, and separate cooling circuits for the electric motor and power electronics. The integrated axles are also more compact than the electric motor, the power electronics, and the cooling circuits therefor being individually installed, thus saving installation space within the chassis frames of the vehicle and allowing more room therein. Each integrated axle is configured independently of other sat(s) in the system. In some examples, the integrated axle may also include a two-speed or three-speed gearbox.

As shown in the embodiment of FIG. 3, the integrated axle 202 is mechanically coupled with a drive axle 102, such as the front axle 102A as shown in FIG. 3. The drive axle 102 is mechanically coupled with a pair of wheels 120, such as the pair of front wheels 120A as shown in FIG. 3. Although not shown, a controller is electrically coupled with the integrated axle 202. Based on the inputs received, the controller turns on (activates or engages) or turns off (deactivates or disengages) one or more of these components to achieve the different modes shown herein. FIG. 4 shows some of the components of the integrated axle 202. For example, the integrated axle 202 includes an electric motor-generator 300, a drive axle 302, and a transmission 304. Other components such as the aforementioned inverter and/or cooling circuit may be included in the integrated axle 202, as suitable. These components are separately or independently operable from the other components (e.g., the transmission 304 is separately operable from the transmission 114). The components of the integrated axle 202 (e.g., the electric motor-generator and at least a portion of the drive axle, etc.) may be mechanically mated to, coupled to, affixed to, or implemented within a common housing 204. The housing may be any suitable structure which supports the positioning of the components, as well as to provide protection of the components. In embodiments, housing 204 is adapted to support each of the first motor 10, second motor 20, and gear system 4. In embodiments housing 204 is further adapted to support electronic controller 40.

FIG. 5 shows an example of the system 200 which incorporates two integrated axles 202A and 202B, with one implemented for each of the front axle 102A and the rear axle 102B, respectively. The integrated axles 202A and 202B are operated using the controller (not shown) and the electrical energy for these axles are provided by a common energy storage 110, such as a battery or a battery pack. The two integrated axles 202A and 202B may be separately and independently operated so as to be implementable as two separate and distinct motive power sources. Each integrated axle may include the same components, including for example an electric motor and a transmission as explained herein, that are separately operable from each other, although they may be operable together simultaneously as well, as suitably controlled by the controller.

FIGS. 6 through 8 show examples of the system 200 where more than two axles (and in effect, more than four wheels) are implemented, with different combinations of integrated electrical axles and engine-powered axles implemented therein. It is to be understood that these figures are provided for illustrative purposes only, such that any additional number of axles may be implemented according to the need of the vehicle and its operation.

FIG. 6 shows an example of the system 200 which incorporates three axles 102A, 102B, and 102C, of which two of them, the front axle 102A and the rear axle 102C, have integrated axles 202A and 202B, respectively, coupled therewith. The other axle (rear axle) 102B is coupled with the engine 104 via the clutch 112, transmission 114, and differential gears 116 as shown. The integrated axles 202A and 202B are electrically powered by the energy storage 110.

FIG. 7 shows an example of the system 200 with three axles 102A, 102B, and 102C, but instead of two integrated axles, only the front axle 102A is coupled with the integrated axle 202, and the two remaining rear axles 102B and 102C are coupled with differential gears 116A and 116B, respectively. The differential gears 116A and 116B are coupled with each other via the driveshaft 122 which may operate both of the gears simultaneously, using the power provided by the engine 104 and transferred through the transmission 114. As such, the rear axles 102B and 102C may be coupled with each other via the drift shaft 122.

FIG. 8 shows an example of the system 200 with all three axles 102A, 102B, and 102C being powered electrically using the energy storage 110. That is, there are three integrated axles 202A, 202B, and 202C for the three axles, each independently operable, as controlled by a controller (not shown). In all examples disclosed herein, the front axle 102A is always implemented with an integrated axle, but the remaining axles may have integrated axles, engine-powered axles, or a combination of both.

FIG. 9 shows an example of a control system 700 for the multi-mode hybrid vehicle system 200 as disclosed herein. The control system 700 includes a controller (multi-axle system controller) 702 which receives inputs 712 and controls the outputs 714. The controller 702 includes a processor 704 and a memory unit 706. The processor may be a microprocessor, a microcontroller, or any other suitable types of processing device or controller as known in the art. The controller 702 controls the operation of the integrated axle(s) 202 and engines 104 over communication lines, for example. It should be understood, however, that communication between controller and the integrated axle(s) and engine(s) may alternatively, or in addition, be performed wirelessly.

It should be understood that, in some embodiments, the controller 702 may form a portion of a processing subsystem including one or more computing devices having non-transient computer readable storage media, processors or processing circuits, and communication hardware. The controller 702 may be a single device or a distributed device, and the functions of the controller may be performed by hardware and/or by processing instructions stored on non-transient machine-readable storage media. Example processors include an application specific integrated circuit (ASIC), a field programmable gate array (FPGA), a digital signal processor (DSP), and a microprocessor including firmware. Example non-transient computer readable storage media includes random access memory (RAM), read only memory (ROM), flash memory, hard disk storage, electronically erasable and programmable ROM (EEPROM), electronically programmable ROM (EPROM), magnetic disk storage, and any other medium which can be used to carry or store processing instructions and data structures and which can be accessed by a general purpose or special purpose computer or other processing device.

Certain operations of the controller 702 described herein include operations to interpret and/or to determine one or more parameters. The parameters may be inputs 712 which may be information or data received from sensors 708 and/or user interface 710, among other means of providing inputs. The sensors may be any suitable sensor that can measure any change or increase in the load of the vehicle or the load applied on the vehicle. The sensors may include, but are not limited to, weight sensors which detect the physical weight of the vehicle and/or its cargo, gyroscopes which detect the incline or decline in which the vehicle may be traveling, and altimeters which detect the altitude or change in altitude as the vehicle travels, among others.

Interpreting or determining, as utilized herein, includes receiving sensor values by any method known in the art, including at least receiving values over communication lines, from a datalink, network communication or input device, receiving an electronic signal (e.g. a voltage, frequency, current, or pulse-width-modulation signal) indicative of the value, such as the current and expected loads of a vehicle as well as user's preference or whether the rear axles are approaching or reaching their performance limit, for example, as further explained herein, receiving a computer generated parameter indicative of the value, reading the value from a memory location on a non-transient machine readable storage medium, receiving the value as a run-time parameter by any means known in the art, and/or by receiving a value by which the interpreted parameter can be calculated, and/or by referencing a default value that is interpreted to be the parameter value.

The above-described embodiments of the technology described herein can be implemented in any of numerous ways. For example, the embodiments may be implemented using hardware, software or a combination thereof. When implemented in software, the software code (or software algorithm) can be executed on any suitable processor or collection of processors, whether provided in a single computing device or distributed among multiple computing devices. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. Though, a processor may be implemented using circuitry in any suitable format.

Further, it should be appreciated that a computing device may be embodied in any of several forms, such as a rack-mounted computer, a desktop computer, a laptop computer, or a tablet computer. Additionally, a computing device may be embedded in a device not generally regarded as a computing device but with suitable processing capabilities, including a Personal Digital Assistant (PDA), a smart phone or any other suitable portable or fixed electronic device.

Also, a computing device may have one or more input and output devices. These devices can be used, among other things, to present the user interface 710 (which may be an output device as well as an input device). Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computing device may receive input information through speech recognition or in other audible format.

Such computing devices may be interconnected by one or more networks in any suitable form, including as a local area network, a controller area network, or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, the disclosed embodiments may be embodied as a computer readable storage medium (or multiple computer readable media) (e.g., a computer memory, one or more floppy discs, compact discs (CD), optical discs, digital video disks (DVD), magnetic tapes, flash memories, circuit configurations in Field Programmable Gate Arrays or other semiconductor devices, or other tangible computer storage medium) encoded with one or more programs that, when executed on one or more computers or other processors, perform methods that implement the various embodiments of the disclosure discussed herein. As is apparent from the foregoing examples, a computer readable storage medium may retain information for a sufficient time to provide computer-executable instructions in a non-transitory form. Such a computer readable storage medium or media can be transportable, such that the program or programs stored thereon can be loaded onto one or more different computers or other processors to implement various aspects of the present disclosure as discussed above. As used herein, the term "computer-readable storage medium" encompasses only a non-transitory computer-readable medium that can be considered to be a manufacture (i.e., article of manufacture) or a machine. Alternatively, or additionally, the disclosure may be embodied as a computer readable medium other than a computer-readable storage medium, such as a propagating signal.

The terms "program" or "software" are used herein in a generic sense to refer to any type of computer code or set of computer-executable instructions that can be employed to program a computing device or other processor to implement various aspects of the present disclosure as discussed above. Additionally, it should be appreciated that according to one aspect of the disclosure, one or more computer programs that when executed perform methods of the present disclosure need not reside on a single computer or processor but may be distributed in a modular fashion amongst a number of different computers or processors to implement various aspects of the present disclosure.

Computer-executable instructions may be in many forms, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields with locations in a computer-readable medium that conveys relationship between the fields. However, any suitable mechanism may be used to establish a relationship between information in fields of a data structure, including through the use of pointers, tags or other mechanisms that establish relationship between data elements.

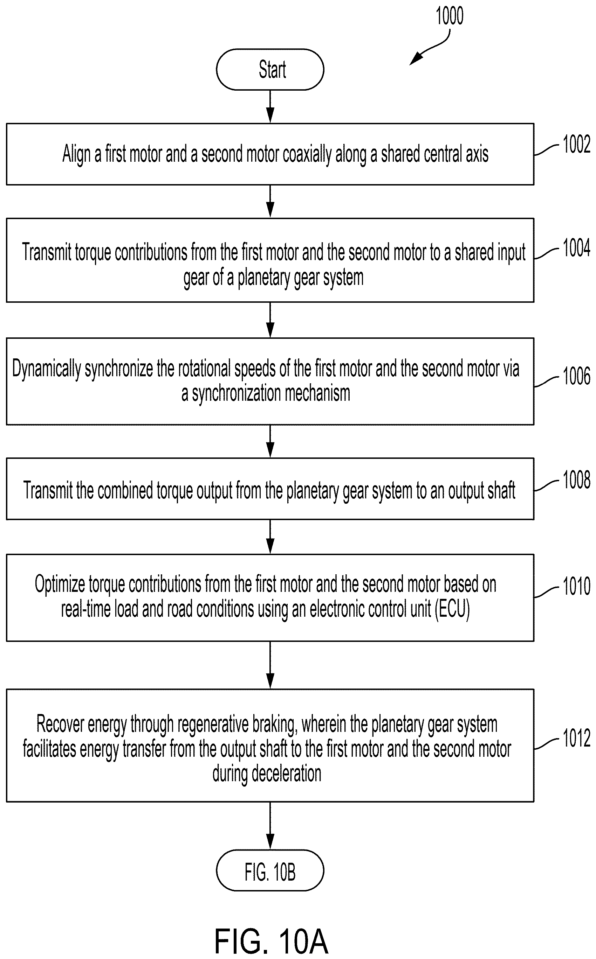

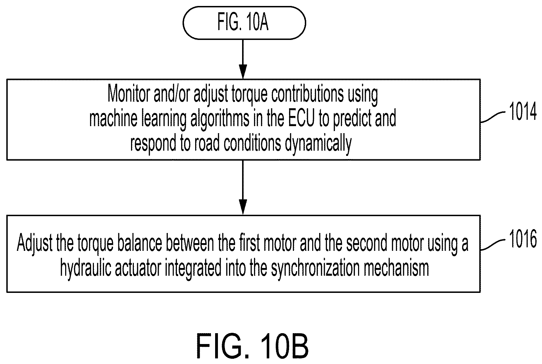

FIG. 10 is a flow chart of a process 1000, according to an example of the present disclosure. According to an example, one or more process blocks of FIG. 10 may be performed by coaxial drivetrain system as described above.

As shown in FIG. 10, process 1000 may include aligning a first motor and a second motor coaxially along a shared central axis. As shown in FIG. 10, for example, coaxial drivetrain system may transmit torque contributions from the first motor and the second motor to a shared input gear of a planetary gear system (block 1002). Process 1000 may include transmit torque contributions from the first motor and the second motor to a shared input gear of a planetary gear system (block 1004). Process 1000 may include dynamically synchronizing the rotational speeds of the first motor and the second motor via a synchronization mechanism (block 1006). Process 1000 may include transmitting the combined torque output from the planetary gear system to an output shaft (block 1008). Process 1000 may include optimizing torque contributions from the first motor and the second motor based on real-time load and road conditions using an electronic control unit (ECU) (block 1010).

Process 1000 may include additional implementations, such as any single implementation or any combination of implementations described below and/or in connection with one or more other processes described elsewhere herein. A first implementation, process 1000 may include recovering energy through regenerative braking, where the planetary gear system facilitates energy transfer from the output shaft to the first motor and the second motor during deceleration (block 1012).

A second implementation, alone or in combination with the first implementation, process 1000 may include monitoring and adjusting torque contributions using machine learning algorithms in the ECU to predict and respond to road conditions dynamically (block 1014).

A third implementation, alone or in combination with the first and second implementation, process 1000 may include adjusting the torque balance between the first motor and the second motor using a hydraulic actuator integrated into the synchronization mechanism (block 1014).

A fourth implementation, alone or in combination with one or more of the first through third implementations, process 1000 may include regulating the operating temperature of the first motor, second motor, and planetary gear system using an integrated thermal management system during high-load operation (block 1016).

It should be noted that while FIG. 10 shows example blocks of process 1000, in some implementations, process 1000 may include additional blocks, fewer blocks, different blocks, or differently arranged blocks than those depicted in FIG. 10. Additionally, or alternatively, two or more of the blocks of process 1000 may be performed in parallel.

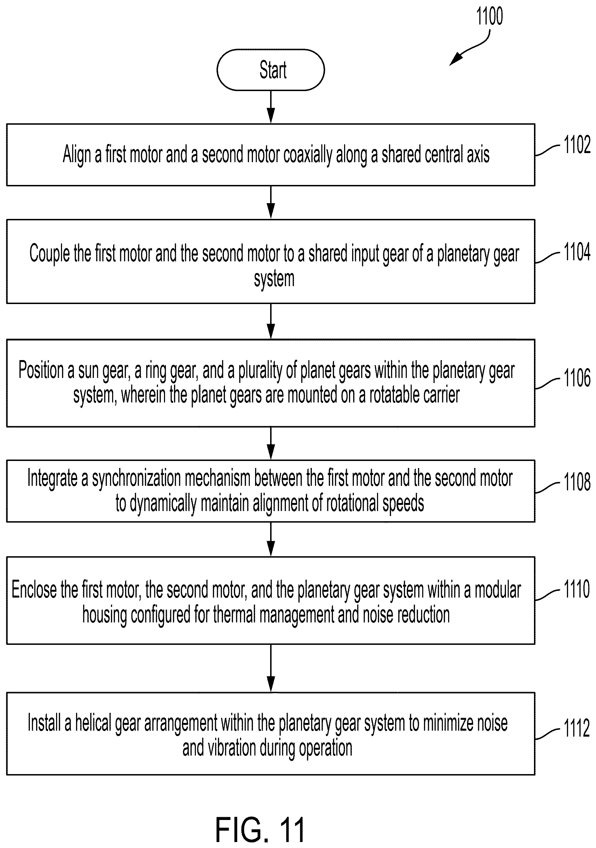

FIG. 11 is a flow chart of a process 1100, according to an example of the present disclosure. According to an example, one or more process blocks of FIG. 11 may be performed by coaxial drivetrain system as discussed above.

As shown in FIG. 11, process 1100 may include aligning a first motor and a second motor coaxially along a shared central axis (block 1102). For example, coaxial drivetrain system may include any of the systems as described above. As in addition shown in FIG. 11, process 1100 may include a hydraulic actuator within the synchronization mechanism to dynamically adjust torque balance between the first and second motors (block 1104). For example, coaxial drivetrain system may comprise a hydraulic actuator within the synchronization mechanism to dynamically adjust torque balance between the first and second motors, as described above. As also shown in FIG. 11, process 1100 may include a helical gear arrangement configured to reduce noise and vibration during torque transmission (block 1106). For example, coaxial drivetrain system may include a helical gear arrangement configured to reduce noise and vibration dure torque transmission, as described above. As further shown in FIG. 11, process 1100 may include a thermal management system integrated with the first motor, second motor, and planetary gear system to regulate operating temperatures under varying load conditions (block 1108). For example, coaxial drivetrain system may comprise a thermal management system integrated with the first motor, second motor, and planetary gear system to regulate operating temperatures under varying load conditions, as described above. As in addition shown in FIG. 11, process 1100 may include construction using advanced composite materials (block 1110). For example, coaxial drivetrain system may be constructed using advanced composite material, as described above.

It should be noted that while FIG. 11 shows example blocks of process 1100, in some implementations, process 1100 may include additional blocks, fewer blocks, different blocks, or differently arranged blocks than those depicted in FIG. 11. Additionally, or alternatively, two or more of the blocks of process 1100 may be performed in parallel.

A list of Examples not intended to further limit the disclosure herein but elaborate on the disclosure is below.

Example 1. A coaxial drivetrain subsystem for an automotive vehicle comprising: a planetary gear system comprising a sun gear, a ring gear, and a plurality of planet gears mounted on a rotatable carrier; a first motor and a second motor aligned coaxially along a shared central axis; a shared input gear coupled to the planetary gear system, wherein the planetary gear system is configured to combine torque contributions from the first motor and the second motor and transmit the combined torque to an output shaft; and a synchronization mechanism configured to maintain alignment of rotational speeds between the first motor and the second motor.

Example 2. The subsystem as Example 1 describes, wherein the synchronization mechanism includes an electronically controlled clutch assembly for modulating torque contributions from the first and second motors.

Example 3. The subsystem as either of Examples 1 or 2 describe, further comprising a hydraulic actuator within the synchronization mechanism to dynamically adjust torque balance between the first and second motors.

Example 4. The subsystem as any of Examples 1-3 describe, wherein the planetary gear system includes a helical gear arrangement configured to reduce noise and vibration during torque transmission.

Example 5. The subsystem as any of Examples 1-4 describe, further comprising a thermal management system integrated with the first motor, second motor, and planetary gear system to regulate operating temperatures under varying load conditions.

Example 6. The subsystem as any of Examples 1-5 describe, wherein the planetary gear system is constructed using advanced composite materials to reduce weight and enhance durability.

Example 7. The subsystem as any of Examples 1-6 describe, further comprising a regenerative braking system configured to recover energy through the first and second motors, wherein the planetary gear system facilitates energy recovery to the battery storage system of the vehicle.

Example 8. The subsystem as any of Examples 1-7 describe, further comprising an electronic control unit (ECU) configured to dynamically adjust torque contributions from the first motor and the second motor based on real-time load and driving conditions.

Example 9. An automotive drivetrain system comprising: the coaxial drivetrain subsystem as any of Examples 1-8 describe; a differential coupled to the output shaft of the planetary gear system, wherein the differential is configured to implement torque vectoring to individual vehicle wheels; a modular housing enclosing the first motor, second motor, and planetary gear system, the housing being compatible with multiple vehicle platforms; and an energy recovery and optimization system configured to prioritize regenerative braking through the first and second motors during deceleration events.

Example 10. The system as any of Examples 1-9 describe, wherein the modular housing includes integrated cooling channels to improve thermal performance of the first motor, second motor, and planetary gear system.

Example 11. The system as any of Examples 1-10 describe, further comprising a noise, vibration, and harshness (NVH) reduction system configured to absorb vibrations from the motors and planetary gear system, ensuring smooth drivetrain operation.

Example 12. The system as any of Examples 1-11 describe, wherein the energy recovery and optimization system is configured to allocate recovered energy between the battery of the vehicle and auxiliary systems based on energy demand.

Example 13. The system as any of Examples 1-12 describe, further comprising a real-time monitoring system integrated with the ECU to track the performance of the motors and the planetary gear system, including torque output, temperature, and rotational speed.

Example 14. The system as any of Examples 1-13 describe, wherein the planetary gear system includes graphene-based components to enhance thermal conductivity and reduce friction during high-load operation.

Example 15. The system as any of Examples 1-14 describe, further comprising adaptive control algorithms implemented in the ECU to optimize power delivery and torque vectoring based on road conditions and vehicle speed.

Example 16. A method for operating a coaxial drivetrain system in an automotive vehicle, the method comprising: aligning a first motor and a second motor coaxially along a shared central axis; transmitting torque contributions from the first motor and the second motor to a shared input gear of a planetary gear system; dynamically synchronizing the rotational speeds of the first motor and the second motor via a synchronization mechanism; transmitting the combined torque output from the planetary gear system to an output shaft; and optimizing torque contributions from the first motor and the second motor based on real-time load and road conditions using an electronic control unit (ECU).

Example 17. The method as Example 16 describes, further comprising recovering energy through regenerative braking, wherein the planetary gear system facilitates energy transfer from the output shaft to the first motor and the second motor during deceleration.

Example 18. The method as either of Examples 16 or 17 describe, further comprising monitoring and adjusting torque contributions using machine learning algorithms in the ECU to predict and respond to road conditions dynamically.

Example 19. The method as any of Examples 16-18 describe, further comprising adjusting the torque balance between the first motor and the second motor using a hydraulic actuator integrated into the synchronization mechanism.

Example 20. The method as any of Examples 16-19 describe, further comprising regulating the operating temperature of the first motor, second motor, and planetary gear system using an integrated thermal management system during high-load operation.

Example 21. A method of assembling a coaxial drivetrain subsystem for an automotive vehicle, the method comprising: aligning a first motor and a second motor coaxially along a shared central axis; coupling the first motor and the second motor to a shared input gear of a planetary gear system; positioning a sun gear, a ring gear, and a plurality of planet gears within the planetary gear system, wherein the planet gears are mounted on a rotatable carrier; integrating a synchronization mechanism between the first motor and the second motor to dynamically maintain alignment of rotational speeds; and enclosing the first motor, the second motor, and the planetary gear system within a modular housing configured for thermal management and noise reduction.

Example 22. The method as Example 21 describes, further comprising installing a helical gear arrangement within the planetary gear system to minimize noise and vibration during operation.

Example 23. The method as either of Examples 21 or 22 describe, further comprising applying advanced composite materials to the planetary gear system components to reduce weight and enhance durability.

Example 24. The method as any of Examples 21-23 describe, wherein integrating the synchronization mechanism includes installing an electronically controlled clutch assembly for modulating torque contributions between the first motor and the second motor.

Example 25. The method as any of Examples 21-24 describe, wherein integrating the synchronization mechanism includes installing a hydraulic actuator to dynamically adjust the torque balance between the first motor and the second motor.

Example 26. The method as any of Examples 21-25 describe, further comprising incorporating a centralized lubrication system into the modular housing to reduce friction and improve the durability of the planetary gear system.

Example 27. The method as any of Examples 21-26 describe, further comprising integrating cooling channels into the modular housing to regulate the operating temperatures of the motors and planetary gear system during high-load operation.

Example 28. The method as any of Examples 21-27 describe, further comprising configuring the modular housing to include mounting points compatible with multiple vehicle platforms for enhanced adaptability.

Example 29. The method as any of Examples 21-28 describe, further comprising installing torque sensors within the synchronization mechanism to monitor and maintain balanced torque contributions during subsystem operation.

Example 30. The method as any of Examples 21-29 describe, further comprising testing the assembled subsystem for alignment accuracy, torque balance, and thermal stability under simulated load conditions.

Example 31. A drivetrain system comprises a first motor defining a first output rotatable about a first axis, and a second motor defining a second output rotatable about the first axis such that the second motor is coaxial with the first motor. A first planetary gearset comprises a sun gear, a ring gear, and a plurality of planet gears coupled between the sun gear and the ring gear, the ring gear operably coupled to the first motor and the sun gear operably coupled to the second motor, and a second planetary gearset includes a first output and a second output, the second planetary gearset operable to couple with the first planetary gearset to transmit power from the first planetary gearset to each of the first output and the second output.

Example 32. The drivetrain system of Example 31 further comprises a carrier operably coupled to the plurality of planet gears of the first planetary gearset, the carrier operable as an output to transmit rotational power from the first planetary gearset to the second planetary gearset.

Example 33. The drivetrain system of any of Examples 31 and 32, the first motor and the second motor are hollow shaft motors each defining a hollow axial channel, and the first output of the second planetary gearset extends through a first hollow axial channel of the first motor and the second output of the second planetary gearset extends through a second hollow axial channel of the second motor.

Example 34. The drivetrain system of any of Examples 31-33, wherein the first motor is positioned on a first lateral side of the first planetary gearset and the second planetary gearset and the second motor is positioned on a second lateral side of the first planetary gearset an the second planetary gearset opposite the first motor.

Example 35. The drivetrain system of any of Examples 31-34, further comprising an electronic controller operably coupled to each of the first motor and the second motor, wherein the electronic controller is operable to control the first motor and the second motor between a plurality of operating states.

Example 36. The drivetrain system of any of Examples 31-35, wherein the plurality of operating states includes a first operating state wherein the first motor is operable to rotate the ring gear of the first planetary gearset while the second motor maintains a position of the sun gear.

Example 37. The drivetrain system of any of Examples 31-36, wherein the plurality of operating states includes a second operating state wherein the second motor is operable to rotate the sun gear of the first planetary gearset while the first motor maintains a position of the ring gear.

Example 38. The drivetrain system of any of Examples 31-37, wherein the plurality of operating states includes a third operating state wherein the first motor is operable to rotate the ring gear of the first planetary gearset in a first rotational direction while the second motor is operable to rotate the sun gear of the first planetary gearset in the first rotational direction.

Example 39. The drivetrain system of any of Examples 31-38, wherein the plurality of operating states includes a fourth operating state wherein the first motor is operable to rotate the ring gear of the first planetary gearset in the first rotational direction while the second motor is operable to rotate the sun gear of the first planetary gearset in a second rotational direction opposite the first rotational direction.

Example 40. A drivetrain system comprises a first motor defining a first channel extending along a central axis and a first output rotatable about the central axis and a second motor defining a second channel extending along the central axis and a second output rotatable about the central axis such that the second motor is coaxial with the first motor. A first planetary gearset comprising a sun gear, a ring gear, and a plurality of planet gears coupled between the sun gear and the ring gear, the ring gear operably coupled to the first motor and the sun gear operably coupled to the second motor. A second gearset is operably coupled to the first planetary gearset. an output assembly comprising: at least one ground engaging member. And a first axle member coupled to the at least one ground engaging member, the first axle adapted to extend through the first channel of the first motor and couple with second gearset.

Example 41. The drivetrain system of Example 40, wherein the first motor is positioned on a first lateral side of the first planetary gearset and the second planetary gearset and the second motor is positioned on a second lateral side of the first planetary gearset and the second planetary gearset opposite the first lateral side.

Example 42. The drivetrain system of Example 41, wherein the at least one ground engaging member includes a first ground engaging member operably coupled to the first axle member and a second ground engaging member operably coupled with a second axle, and the second axle is operably coupled to the second gearset.

Example 43. The drivetrain system of any of Examples 41-42, wherein the first planetary gearset includes a carrier operably coupled to the plurality of planet gears, and the second axle is operable to pass through each of the carrier and the second channel of the second motor.

Example 44. A vehicle, comprising an electrified axle assembly including the drivetrain system of any of Examples 40-43.

Example 45. The vehicle of any of Example 44, wherein the electrified axle assembly includes a housing, and each of the first motor, second motor, first planetary gearset, and second planetary gearset are positioned within the housing.

The examples discussed in the subsequent sections should therefore be viewed as illustrative implementations, rather than limiting definitions of the disclosed technology. Any modifications, enhancements, or refinements made to suit specific applications would be understood by those skilled in the art to be logical extensions of the principles presented herein.

The connecting lines shown in the various figures contained herein are intended to represent exemplary functional relationships and/or physical couplings between the various elements. It should be noted that many alternative or additional functional relationships or physical connections can be present in a practical system. However, the benefits, advantages, solutions to problems, and any elements that can cause any benefit, advantage, or solution to occur or become more pronounced are not to be construed as critical, required, or essential features or elements. The scope is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone can be present in an embodiment, B alone can be present in an embodiment, C alone can be present in an embodiment, or that any combination of the elements A, B or C can be present in a single embodiment; for example, A and B, A and C, B and C, or A and B and C.

In the detailed description herein, references to "one embodiment," "an embodiment," "an example embodiment," etc., indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art with the benefit of the present disclosure to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but can include other elements not expressly listed or inherent to such process, method, article, or apparatus.

While various embodiments of the disclosure have been shown and described, it is understood that these embodiments are not limited thereto. The embodiments may be changed, modified and further applied by those skilled in the art. Therefore, these embodiments are not limited to the detail shown and described previously, but also include all such changes and modifications.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

As used herein, when an element, component, device or layer is described as being "on" "connected to," "coupled to" or "in contact with" another element, component, device or layer, it can be directly on, directly connected to, directly coupled with, in direct contact with, or intervening elements, components, devices or layers may be on, connected, coupled or in contact with the particular element, component or layer, for example. When an element, component, device or layer for example is referred to as being "directly on," "directly connected to," "directly coupled to," or "directly in contact with" another element, component, device or layer, there are no intervening elements, components, devices or layers for example.

Although illustrative methods may be represented by one or more drawings (e.g., flow diagrams, communication flows, etc.), the drawings should not be interpreted as implying any requirement of, or particular order among or between, various steps disclosed herein. However, certain some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," "series" or "group" of items (e.g., inputs, algorithms, data values, etc.) may include one or more items, and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

## Claims

1. A drivetrain system, comprising:
a first motor defining a first output rotatable about a first axis;
a second motor defining a second output rotatable about the first axis such that the second motor is coaxial with the first motor;
a first planetary gearset comprising a sun gear, a ring gear, and a plurality of planet gears coupled between the sun gear and the ring gear, the ring gear operably coupled to the first motor and the sun gear operably coupled to the second motor; and
a second planetary gearset including a first output and a second output, the second planetary gearset operable to couple with the first planetary gearset to transmit power from the first planetary gearset to each of the first output and the second output.

2. The drivetrain system of claim 1, further comprising:
a carrier operably coupled to the plurality of planet gears of the first planetary gearset, the carrier operable as an output to transmit rotational power from the first planetary gearset to the second planetary gearset.

3. The drivetrain system of claim 1 or claim 2, wherein the first motor and the second motor are hollow shaft motors each defining a hollow axial channel, and the first output of the second planetary gearset extends through a first hollow axial channel of the first motor and the second output of the second planetary gearset extends through a second hollow axial channel of the second motor.

4. The drivetrain system of any previous claim, wherein the first motor is positioned on a first lateral side of the first planetary gearset and the second planetary gearset and the second motor is positioned on a second lateral side of the first planetary gearset an the second planetary gearset opposite the first motor.

5. The drivetrain system of claim 4, further comprising an electronic controller operably coupled to each of the first motor and the second motor, wherein the electronic controller is operable to control the first motor and the second motor between a plurality of operating states.

6. The drivetrain system of claim 5, wherein the plurality of operating states includes a first operating state wherein the first motor is operable to rotate the ring gear of the first planetary gearset while the second motor maintains a position of the sun gear.

7. The drivetrain system of claim 6, wherein the plurality of operating states includes a second operating state wherein the second motor is operable to rotate the sun gear of the first planetary gearset while the first motor maintains a position of the ring gear.

8. The drivetrain system of claim 7, wherein the plurality of operating states includes a third operating state wherein the first motor is operable to rotate the ring gear of the first planetary gearset in a first rotational direction while the second motor is operable to rotate the sun gear of the first planetary gearset in the first rotational direction.

9. The drivetrain system of claim 8, wherein the plurality of operating states includes a fourth operating state wherein the first motor is operable to rotate the ring gear of the first planetary gearset in the first rotational direction while the second motor is operable to rotate the sun gear of the first planetary gearset in a second rotational direction opposite the first rotational direction.

10. The drivetrain system of any of claims 5 to 9, further comprising a regenerative braking system configured to recover energy through the first and second motors, wherein the electronic controller is configured to control energy recovery to a battery storage system.

11. The drivetrain system of any previous claim, further comprising a thermal management system integrated with the first motor, second motor, and the first and second planetary gearsets to regulate operating temperatures under varying load conditions.

12. The drivetrain system of any previous claim, wherein the first planetary gearset includes a helical gear arrangement configured to reduce noise and vibration during torque transmission.

13. A vehicle, comprising:
an electrified axle assembly including the drivetrain system of any previous claim, optionally wherein the electrified axle assembly includes a housing, and each of the first motor, second motor, first planetary gearset, and second planetary gearset are positioned within the housing.

14. A method for operating the drivetrain system of any one of claims 5 to 10, the method comprising the ECU controlling the first and second motors to operate in at least one of the first, second, third, or fourth operating states.

15. The method of claim 14, further comprising the ECU monitoring and adjusting torque contributions using machine learning algorithms to predict and respond to road conditions dynamically.
